# EUROPÄISCHE PATENTSCHRIFT

(11) **EP 0 448 670 B1**
(45) Veröffentlichungstag und Bekanntmachung des Hinweises auf die Patenterteilung: **15.12.1993**
(21) Anmeldenummer: 90914906.4
(22) Anmeldetag: 12.10.1990
(51) Int. Cl.: B60T 8/32

(54) **VERFAHREN ZUM STEUERN DES BREMSDRUCKES IN EINER BLOCKIERGESCHÜTZTEN BREMSANLAGE EINES ZWEISPURIGEN FAHRZEUGES**
PROCESS FOR ANTI-LOCK CONTROL OF THE BRAKING PRESSURE IN THE BRAKING SYSTEM OF AN AXLED VEHICLE
PROCEDE DE REGULATION DE LA PRESSION DES FREINS DANS UN SYSTEME DE FREINAGE AVEC ANTI-DERAPEUR AUTOMATIQUE POUR UN VEHICULE A ESSIEU

(30) Priorität: 13.10.1989 DE 3934308
(43) Veröffentlichungstag der Anmeldung: 02.10.1991
(73) Patentinhaber: LUCAS INDUSTRIES PUBLIC LIMITED COMPANY, Birmingham, B19 2XF (GB)
(72) Erfinder: BRASCHEL, Volker, D-5450 Neuwied (DE); SEITZ, Dieter, D-5450 Neuwied (DE)
(74) Vertreter: von Hellfeld, Axel, Dr. Dipl.-Phys.
(86) Internationale Anmeldenummer: EP9001733
(87) Internationale Veröffentlichungsnummer: WO9105687

(56) Entgegenhaltungen:
- DE-A- 3 209 369
- FR-A- 2 430 874
- GB-A- 2 016 621
- GB-A- 2 026 113

## Beschreibung

Die Erfindung betrifft ein Verfahren zum Steuern des Bremsdruckes in einer blockiergeschützten Bremsanlage eines zweispurigen Fahrzeuges, bei dem die Drehgeschwindigkeiten der Räder und/oder ihre Drehbeschleunigungen gemessen und mit Schwellenwerten verglichen werden, um von auf verschiedenen Spuren der Hinterachse des Fahrzeuges angeordneten Rädern dasjenige auszuwählen, das zuerst eine Instabilität zeigt und aufgrund seiner Drehgeschwindigkeit bzw. seines Schlupfes Steuersignale für den Abbau und den Aufbau des Bremsdruckes in den Bremsen der Räder abzuleiten und gemäß den Steuersignalen den Bremsen an den Hinterrädern Druckaufbau-Impulsserien zuzuführen.

Es sind eine Vielzahl von Algorithmen zum Steuern des Bremsdruckes in einer blockiergeschützten Fahrzeug-Bremsanlage bekannt. Die zum Durchführen einer ABS-Bremsregelung erforderlichen Meßeinrichtungen, Ventile und Steuereinrichtungen sind in vielfältiger Ausgestaltung ebenfalls bekannt. Neue Verfahren zum Steuern des Bremsdruckes in ABS-Anlagen werden unter Verwendung bekannter Meß- und Steuereinrichtungen (Drehzahlsensoren, Ventile etc.) durch entsprechende Programmierung eines Prozessors verwirklicht.

Das Ziel, bei einer ABS-Regelung einen möglichst kurzen Bremsweg bei guter Lenkbarkeit des Fahrzeuges zu erreichen, wird erschwert durch den Umstand, daß die Optimierung einer ABS-Regelung wesentlich von den Straßen- und Fahrzeugverhältnissen abhängt. Die Regelung muß den gerade herrschenden Verhältnissen, welche sich laufend ändern können und über welche der die ABS-Bremsung steuernde Rechner nur sehr indirekte und eingeschränkte Informationen erhält, angepaßt sein.

Neigt ein Rad aufgrund seines Schlupfes bzw. aufgrund seiner Drehverzögerung zum Blockieren, so wird dieses Rad als "instabil" bezeichnet. Lassen hingegen die Drehverzögerung bzw. der Schlupf eines Rades noch kein Blockieren befürchten, so gilt dieses Rad als "stabil".

Wesentlich für eine gute Lenkbarkeit des Fahrzeuges ist insbesondere die Seitenführung der Hinterräder. Kommt ein Hinterrad in einen zu hohen Schlupf, d.h. wird es instabil, so ist aufgrund einer hiermit verbundenen Reduzierung der Seitenführungskraft des Rades die Lenkstabilität des Fahrzeuges gefährdet. Es kann ein höchst unerwünschtes Drehmoment um die Hochachse des Fahrzeuges auftreten, das sogenannte Giermoment.

Es ist im Stand der Technik bekannt, zur Gewährleistung einer guten Lenkbarkeit (Stabilität) des Fahrzeuges eine sogenannte "Select-Low"-Regelung an den Rädern der Hinterachse des Fahrzeuges durchzuführen. Bei einer "Select-Low"-Regelung wird angenommen, daß ein Rad der Hinterachse eines zweispurigen Fahrzeuges schneller instabil wird als ein anderes. Die Ursachen hierfür können vielfältig sein (siehe unten). Eine reine "Select-Low"-Regelung sieht in einem solchen Fall vor, daß auch am noch stabil laufendem Rad der Hinterachse eine Antiblockierregelung stattfindet, d.h. der Druck so wie am instabilen Rad abgebaut und anschließend wieder aufgebaut wird, was sich oftmals hintereinander wiederholen kann.

Es ist im Stand der Technik (EP-0177817) auch bereits bekannt, den Druckaufbau an den Bremsen, insbesondere der Hinterräder, gepulst durchzuführen. Hierdurch wird eine bessere Anpassung des Bremsdruckes an den gewünschten Wert erreicht und ein sogenanntes "Überschießen" des Bremsdruckes verhindert.

Eine reine "Select-Low"-Regelung der oben beschriebenen Art hat zwar den Vorteil einer guten Lenkstabilität des Fahrzeuges, ist aber mit dem Nachteil verbunden, daß Bremsweg verschenkt wird weil das stabile Hinterrad stärker gebremst werden könnte.

Nicht nur unterschiedliche Fahrbahnverhältnisse können zu unterschiedlichen Stabilitäten der beiden Hinterräder eines Fahrzeuges führen, sondern auch andere Umstände, wie unterschiedliche Befüllvolumen der Radbremszylinder und/oder Toleranzen der Ventilschaltzeiten und/oder Toleranzen der Ventilbedrosselungen. Auch bei völlig identischer elektrischer Ansteuerung der Ventile können sich deshalb unterschiedliche Drücke in den Bremsen der beiden Hinterräder einstellen, so daß ein Rad schneller instabil wird als das andere. Selbst bei exakt gleichen hydraulischen Drucken in den Bremsen der beiden Hinterräder muß sich nicht an beiden Rädern das gleiche Bremsmoment einstellen, da durch Reibwertunterschiede zwischen Belag und Scheibe oder Belag und Trommel ebenfalls unterschiedliche Abbremsungen erfolgen können.

Die DE 32 09 369 A1 beschreibt eine ABS-Regelung, bei der zur Vermeidung von hohen Giermomenten und zur Reduzierung des Bremsweges eine Zwangssteuerung am sogenannten High-Rad erfolgt. Es werden unterschiedliche Tastverhältnisse am Low- und am High-Rad verwendet.

Die DE 19 14 765 C2 zeigt Möglichkeiten auf, das Impuls/Impulspauseverhältnis zwischen Null und unendlich, abhängig vom Radverhalten, zu verändern, so daß sich jeder beliebige Druckanstiegsgradient einstellen läßt. Die Regelung bezieht sich dort aber auf ein einzelnes Rad.

Bei der Bremsanlage gemäß der DE 34 10 083 A1 wird mit dem Einsetzen einer Regelung am Low-Rad der Druck am anderen Rad so lange erhöht, bis auch das High-Rad in einen Regelzustand kommt.

Aus der nicht vorveröffentlichten DE 38 15 732 A1 ist eine modifizierte "Select-Low"-Regelung bekannt, die mit der vorliegenden Erfindung die Aufgabe gemeinsam hat, unter Beibehaltung der Vorteile der "Select-Low"-Regelung eine bessere Bremswirkung zu erzielen. Die Vorteile der "Select-Low"-Regelung sind hauptsächlich darin zu sehen, daß mit geringem Aufwand (Schaltung und Software) eine gute Fahrzeugstabilität beim Bremsen erreicht wird.

Bei der vorstehend genannten, nicht vorveröffentlichten DE 38 15 732 A1 ist eine gesonderte Zusatzschaltung vorgesehen, welche eine Korrektur der Bremsmomente an den beiden Hinterrädern durchführt. Die vorliegende Erfindung erfordert keine zusätzlich angeordnete Schaltung, sondern wird allein durch ein entsprechendes Software-Programm implementiert. Desweiteren erfolgt bei der DE 38 15 732 eine Bestimmung des Bremsmomentenunterschiedes zwischen den beiden Hinterrädern. Demgegenüber dient bei der vorliegenden Erfindung als Maß für die Instabilität der Räder das Überschreiten von vorgegebenen Schwellenwerten.

Schließlich schlägt die hier diskutierte ältere Anmeldung noch vor, die Bremse des stablien Rades mit mehr Druck zu beaufschlagen, um an diesem Rad ein höheres Bremsmoment zu erreichen. Die vorliegende Erfindung hingegen lehrt, das instabile Rad mit geringerem Druck zu versorgen und zwar nachdem der erste Regelzyklus durchlaufen ist.

Der erfindungsgemäße ABS-Regelalgorithmus hat insbesondere bei Kurvenfahrt und bei unterschiedlichen Fahrbahnverhältnissen unter den linken und rechten Rädern des Fahrzeuges (sogenannter µ-Split) ein anderes Bremsverhalten zur Folge als das Regelverfahren gemäß der DE 38 15 732.

Der Anmelder hat sich angesichts der DE 3815732A1 freiwillig eingeschränkt und gesonderte Ansprüche für Deutschland vorgelegt.

Die Erfindung setzt sich das Ziel, eine sogenannte "Select-Low"-Regelung so zu modifizieren, daß ihre obengenannten Vorteile erhalten bleiben, aber der Bremsweg reduziert wird.

Erfindungsgemäß ist zur Lösung dieser Aufgabe vorgesehen, daß der Bremse des zunächst instabilen einen Rades der Hinterachse nach Erreichen eines stabilen Zustandes eine Druckaufbau-Impulsserie zugeführt wird, die ein kleineres Tastverhältnis als die der Bremse des stabilen anderen Rades der Hinterachse zugeführte Druckaufbau-Impulsserie.

Wie in der Elektrotechnik wird auch hier der Begriff "Tastverhältnis" verstanden als Verhältnis von Impulsdauer zu Periodendauer bei einer Impulsfolge.

Gemäß einer anderen Ausführungsform des Erfindungsgedankens ist vorgesehen, daß der Bremse des zunächst instabilen einen Rades der Hinterachse eine Druckaufbau-Impulsserie zugeführt wird, die eine kleinere Impulsfolgefrequenz als die der Bremse der stabilen anderen Rades der Hinterachse zugeführte Druckaufbau-Impulsserie.

Die Impulsfolgefrequenz ist der Kehrwert der Periodendauer der sich periodisch wiederholenden Folge einzelner Impulse.

Erfindungsgemäß ist also vorgesehen, die Impulsbreiten (Längen einzelner Impulse) der Druckaufbau-Impulsserien an den Bremsen der Hinterräder des Fahrzeuges dann unterschiedlich einzustellen, wenn während einer Instabilitätsphase des sogenannten "Low-Rades" (also das früher aus einem der obengenannten Gründe in Instabilität gelangende Rad) noch keine Instabilität des sogenannten "High-Rades" aufgetreten ist, das letztgenannte Rad also noch einen Schlupf und eine Drehverzögerung aufweist, die keine Blockierneigung anzeigen.

Voraussetzung für die erfindungsgemäße Regelung ist, daß nicht beide Räder der Hinterachse des Fahrzeuges instabil werden.

Gemäß bevorzugten Ausgestaltungen der Erfindung ist vorgesehen, die Differenzen der Tastverhältnisse bzw. Impulsfolgefrequenzen der Druckaufbau-Impulsserien abhängig zu machen von dem Maß der Instabilität des instabilen Rades, d.h. dem Maß, mit dem die Drehverzögerung bzw. der Schlupf dieses Rades vorgegebene Schwellenwerte überschreiten.

Gemäß einer weiteren Ausgestaltung der Erfindung ist vorgesehen, die Differenz der Tastverhältnisse (Impulsbreiten) bzw. der Impulsfolgefrequenzen zu begrenzen, nämlich auf einen vorgegeben Maximalwert. Dies hat den Vorteil, daß bei Bremsungen auf Fahrbahnen mit inhomogenen Reibungskoeffizienten oder bei Kurvenbremsungen die Differenz der Bremsmomente an den beiden Hinterrädern begrenzt wird und zumindest an dem stabiler laufenden Rad eine gute Seitenführungskraft erhalten bleibt. Die vorgegebene Differenz wird aber ausreichend groß eingestellt, um die oben beschriebenen Abweichungen der Bremsdrucke aufgrund von unterschiedlichen Befüllvolumen der Radbremszylinder und/oder Toleranzen der Ventilschaltzeiten und/oder Toleranzen der Ventilbedrosselungen auszugleichen, damit an den Rädern der Hinterachse nicht nur eine gute Seitenführungskraft vorliegt, sondern mit Ihnen auch eine starke Bremswirkung erzielt wird.

Die Erfindung ermöglicht also, eine modifizierte "Select-Low"-Regelung mit gleichen elektrischen Ansteuerzeiten (Taktfolgen) für jedes Hinterrad durchzuführen. Variiert zu werden braucht gemäß einer bevorzugten Ausgestaltung der Erfindung nur das Tastverhältnis.

## Patentansprüche (Patentansprüche für folgende(n) Vertragsstaat(en): ES, FR, GB, IT)

1. Verfahren zum Steuern des Bremsdruckes in einer blockiergeschützten Bremsanlage eines zweispurigen Fahrzeuges, bei dem die Drehgeschwindigkeiten der Räder und/oder ihre Drehbeschleunigungen gemessen und mit Schwellenwerten verglichen werden, um von auf verschiedenen Spuren der Hinterachse des Fahrzeuges angeordneten Rädern dasjenige auszuwählen, das zuerst eine Instabilität zeigt und aufgrund seiner Drehgeschwindigkeit bzw. seines Schlupfes Steuersignale für den Abbau und den Aufbau des Bremsdruckes in den Bremsen der Räder abzuleiten und gemäß den Steuersignalen den Bremsen an den Hinterrädern Druckaufbau-Impulsserien zuzuführen,
dadurch **gekennzeichnet**,
daß der Bremse des zunächst instabilen einen Rades der Hinterachse nach Erreichen eines stabilen Zustandes eine Druckaufbau-Impulsserie zugeführt wird, die ein kleineres Tastverhältnis hat als die der Bremse des stabilen anderen Rades der Hinterachse zugeführte Druckaufbau-Impulsserie.

2. Verfahren nach Anspruch 1,
dadurch **gekennzeichnet**,
daß die Differenz der Tastverhältnisse der Druckaufbau-Impulsserien abhängig ist von dem Maß der Instabilität des einen Rades.

3. Verfahren nach einem der Ansprüche 1 oder 2,
dadurch **gekennzeichnet**,
daß für die Differenz der Tastverhältnisse ein Maximalwert vorgegeben wird.

4. Verfahren zum Steuern des Bremsdruckes in einer blockiergeschützten Bremsanlage eines zweispurigen Fahrzeuges, bei dem die Drehgeschwindigkeiten der Räder und/oder ihre Drehbeschleunigungen gemessen und mit Schwellenwerten verglichen werden, um von auf verschiedenen Spuren der Hinterachse des Fahrzeuges angeordneten Rädern dasjenige auszuwählen, das zuerst eine Instabilität zeigt und aufgrund seiner Drehgeschwindigkeit bzw. seines Schlupfes Steuersignale für den Abbau und den Aufbau des Bremsdruckes in den Bremsen der Räder abzuleiten und gemäß den Steuersignalen den Bremsen an den Hinterrädern Druckaufbau-Impulsserien zuzuführen,
dadurch **gekennzeichnet**,
daß der Bremse des zunächst instabilen einen Rades der Hinterachse nach Erreichen eines stabilen Zustandes eine Druckaufbau-Impulsserie zugeführt wird, die eine kleinere Impulsfolgefrequenz hat als die der Bremse des stabilen anderen Rades der Hinterachse zugeführte Druckaufbau-Impulsserie.

5. Verfahren nach Anspruch 4,
dadurch **gekennzeichnet**,
daß die Differenz der Impulsfolgefrequenzen der Druckaufbau-Impulsserien abhängig ist von dem Maß der Instabilität des einen Rades.

6. Verfahren nach einem der Ansprüche 4 oder 5,
dadurch **gekennzeichnet**,
daß für die Differenz der Impulsfolgefrequenzen ein Maximalwert vorgegeben wird.

## Patentansprüche (Patentansprüche für folgende(n) Vertragsstaat(en): DE)

1. Verfahren zum Steuern des Bremsdruckes in einer blockiergeschützten Bremsanlage eines zweispurigen Fahrzeuges, bei dem die Drehgeschwindigkeiten der Räder und/oder ihre Drehbeschleunigungen gemessen und mit Schwellenwerten verglichen werden, um von auf verschiedenen Spuren der Hinterachse des Fahrzeuges angeordneten Rädern dasjenige auszuwählen, das zuerst eine Instabilität zeigt und aufgrund seiner Drehgeschwindigkeit bzw. seines Schlupfes Steuersignale für den Abbau und Aufbau des Bremsdruckes in den Bremsen der Räder abzuleiten und gemäß den Steuersignalen den Bremsen an den Hinterrädern Druckaufbau-Impulsserien zuzuführen,
dadurch **gekennzeichnet**,
daß der Bremse des zunächst instabilen einen Rades der Hinterachse nach Erreichen eines stabilen Zustandes eine Druckaufbau-Impulsserie zugeführt wird, die ein kleineres Tastverhältnis hat als die der Bremse des stabilen anderen Rades der Hinterachse zugeführte Druckaufbau-Impulsserie, wobei die Differenz der Tastverhältnisse der Druckaufbau-Impulsserie abhängig ist von dem Maß der Instabilität des einen Rades.

2. Verfahren nach Anspruch 1,
dadurch **gekennzeichnet**,
daß für die Differenz der Tastverhältnisse ein Maximalwert vorgegeben wird.

3. Verfahren zum Steuern des Bremsdruckes in einer blockiergeschützten Bremsanlage eines zweispurigen Fahrzeuges, bei dem die Drehgeschwindigkeiten der Räder und/oder ihre Drehbeschleunigungen gemessen und mit Schwellenwerten verglichen werden, um von auf verschiedenen Spuren der Hinterachse des Fahrzeuges angeordneten Rädern dasjenige auszwählen, das zuerst eine Instabilität zeigt und aufgrund seiner Drehgeschwindigkeit bzw. seines Schlupfes Steuersignale für den Abbau und den Aufbau des Bremsdruckes in den Bremsen der Räder abzuleiten und gemäß den Steuersignalen den Bremsen an den Hinterrädern Druckaufbau-Impulsserien zuzuführen,
dadurch **gekennzeichnet**,
daß der Bremse des zunächst instabilen einen Rades der Hinterachse nach Erreichen eines stabilen Zustandes eine Druckaufbau-Impulsserie zugeführt wird, die eine kleinere Impulsfolgefrequenz hat als die der Bremse des stabilen anderen Rades der Hinterachse zugeführte Druckaufbau-Impulsserie, wobei die Differenz der Impulsfolgefrequenzen der Druckaufbau-Impulsserie abhängig ist von dem Maß der Instabilität des einen Rades.

4. Verfahren nach Anspruch 3,
dadurch **gekennzeichnet**,
daß für die Differenz der Impulsfolgefrequenzen ein Maximalwert vorgegeben wird.

## Claims (Claims for the following Contracting State(s): ES, FR, GB, IT)

1. A method of controlling the brake pressure in an anti-lock brake system of a dual-track vehicle wherein the rotational speeds of the wheels and/or their rotational accelerations are measured and compared with threshold values so as to select from among wheels mounted in different tracks of the rear axle of the vehicle the one which is the first to show instability and derive from its rotational speed or slip control signals for decrease and increase of the brake pressure in the brakes of the wheels and apply pressure raising pulse trains to the rear wheel brakes in response to those control signals, **characterized** in that the brake of the one wheel which first is instable on the rear axle, having reached a stable state, is fed with a pressure raising pulse train which has a smaller mark-to-space ratio than the pressure raising pulse train applied to the brake of the other, stable wheel of the rear axle.

2. The method as claimed in claim 1, characterized in that the difference of the mark-to-space ratios of the pressure raising pulse trains is dependent on the amount of instability of the one wheel.

3. The method as claimed in claim 1 or 2, characterized in that a maximum value is predetermined for the difference of the mark-to-space ratios.

4. A method of controlling the brake pressure in an anti-lock brake system of a dual-track vehicle wherein the rotational speeds of the wheels and/or their rotational accelerations are measured and compared with threshold values so as to select from among wheels mounted in different tracks of the rear axle of the vehicle the one which is the first to show instability and derive from its rotational speed or slip control signals for decrease and increase of the brake pressure in the brakes of the wheels and apply pressure raising pulse trains to the rear wheel brakes in response to those control signals, **characterized** in that the brake of the one wheel which first is instable on the rear axle, having reached a stable state, is fed with a pressure raising pulse train which has a smaller pulse repetition rate than the pressure raising pulse train applied to the brake of the other, stable wheel of the rear axle.

5. The method as claimed in claim 4, characterized in that the difference of the pulse repetition rates of the pressure raising pulse trains is dependent on the amount of instability of the one wheel.

6. The method as claimed in claim 4 or 5, characterized in that a maximum value is predetermined for the difference of the pulse repetition rates.

## Claims (Claims for the following Contracting State(s): DE)

1. A method of controlling the brake pressure in an anti-lock brake system of a dual-track vehicle wherein the rotational speeds of the wheels and/or their rotational accelerations are measured and compared with threshold values so as to select from among wheels mounted in different tracks of the rear axle of the vehicle the one which is the first to show instability and derive from its rotational speed or slip control signals for decrease and increase of the brake pressure in the brakes of the wheels and apply pressure raising pulse trains to the rear wheel brakes in response to those control signals, **characterized** in that the brake of the one wheel which first is instable on the rear axle, having reached a stable state, is fed with a pressure raising pulse train which has a smaller mark-to-space ratio than the pressure raising pulse train applied to the brake of the other, stable wheel of the rear axle, the difference of the mark-to-space ratios of the pressure raising pulse train being dependent on the amount of instability of the one wheel.

2. The method as claimed in claim 1, characterized in that a maximum value is predetermined for the difference of the mark-to-space ratios.

3. A method of controlling the brake pressure in an anti-lock brake system of a dual-track vehicle wherein the rotational speeds of the wheels and/or their rotational accelerations are measured and compared with threshold values so as to select from among wheels mounted in different tracks of the rear axle of the vehicle the one which is the first to show instability and derive from its rotational speed or slip control signals for decrease and increase of the brake pressure in the brakes of the wheels and apply pressure raising pulse trains to the rear wheel brakes in response to those control signals, **characterized** in that the brake of the one wheel which first is instable on the rear axle, having reached a stable state, is fed with a pressure raising pulse train which has a smaller pulse repetition rate than the pressure raising pulse train applied to the brake of the other, stable wheel of the rear axle, the difference of the pulse repetition rates of the pressure raising pulse train being dependent on the amount of instability of the one wheel.

4. The method as claimed in claim 3, characterized in that a maximum value is predetermined for the difference of the pulse repetition rates.

## Revendications (Revendications pour l'(les) Etat(s) contractant(s) suivant(s): ES, FR, GB, IT)

1. Procédé pour commander la pression de freinage dans une installation de freinage, protégée contre un blocage, d'un véhicule à deux voies, où les vitesses de rotation des roues et/ou leurs accélérations de rotation sont mesurées et sont comparées avec des valeurs de seuils, de façon à sélectionner parmi les roues disposées sur différentes voies de l'essieu arrière du véhicule celle qui présente initialement une instabilité, à produire, sur la base de sa vitesse de rotation ou de son patinage, des signaux de commande pour la diminution et l'augmentation de la pression de freinage dans les freins des roues et à appliquer aus freins, en correspondance aux signaux de commande, des séries d'impulsions d'augmentation de pression dans les roues arrière, caractérisé en ce que le frein d'une des roues initialement instable de l'essieu arrière recevra. après atteinte d'un état stable, une série d'impulsions d'augmentation de pression, qui ont un taux d'utilisation plus petit que la série d'impulsions d'augmentation de pression qui sont appliquées au frein de l'autre roue stable de l'essieu arrière.

2. Procédé selon la revendication 1, caractérisé en ce que la différence entre les taux d'utilisation des impulsions de la série d'impulsions d'augmentation de pression est fonction du degré d'instabilité d'une des roues.

3. Procédé selon une des revendications 1 ou 2, caractérisé en ce qu'on prédétermine une valeur maximale pour la différence des taux d'utilisation.

4. Procédé pour commander la pression de freinage dans une installation de freinage, protégée contre un blocage, d'un véhicule deux voies, où les vitesses de rotation des roues et/ou leurs accélérations de rotation sont mesurées et sont comparées avec des valeurs de seuils. de façon à sélectionner parmi les roues disposées sur différentes voies de l'essieu arrière du véhicule celle qui présente initialement une instabilité, à produire, sur la base de sa vitesse de rotation ou de son patinage. des signaux de commande pour la diminution et l'augmentation de la pression de freinage dans les freins des roues et à appliquer aux freins, en correspondance aux signaux de commande, des séries d'impulsions d'augmentation de pression dans les roues arrière, caractérisé en ce que le frein d'une des roues initialement instable de l'essieu arrière reçoit, après atteinte d'un état stable, une série d'impulsions d'augmentation de pression, qui a une plus petite fréquence de succession d'impulsions que la série d'impulsions d'augmentation de pression qui est appliquée au frein de l'autre roue stable de l'essieu arrière.

5. Procédé selon la revendication 4, caractérisé en ce que la différence entre les fréquences de succession d'impulsions des séries d'impulsions d'augmentation de pression est fonction du degré d'instabilité d'une des roues.

6. Procédé selon une des revendications 4 ou 5, caractérisé en ce qu'on prédétermine une valeur maximale pour la différence des fréquences de succession d'impulsions.

## Revendications (Revendications pour l'(les) Etat(s) contractant(s) suivant(s): DE)

1. Procédé pour commander la pression de freinage dans une installation de freinage, protégée contre un blocage, d'un véhicule à deux voies, où les vitesses de rotation des roues et/ou leurs accélérations de rotation sont mesurées et sont comparées avec des valeurs de seuils, de façon à sélectionner parmi les roues disposées sur différentes voies de l'essieu arrière du véhicule celle qui présente initialement une instabilité, à produire, sur la base de sa vitesse de rotation ou de son patinage, des signaux de commande pour la diminution et l'augmentation de la pression de freinage dans les freins des roues et à appliquer aux freins, en correspondance aux signaux de commande, des séries d'impulsions d'augmentation de pression dans les roues arrière, caractérisé en ce que le frein d'une des roues initialement instable de l'essieu arrière recevra, après atteinte d'un état stable, une série d'impulsions d'augmentation de pression, qui ont un taux d'utilisation plus petit que la série d'impulsions d'augmentation de pression qui sont appliquées au frein de l'autre roue stable de l'essieu arrière, la différence entre les taux d'utilisation des impulsions de la série d'impulsions d'augmentation de pression étant fonction du degré d'instabilité d'une des roues.

2. Procédé selon la revendication 1, caractérisé en ce qu'on prédétermine une valeur maximale pour la différence des taux d'utilisation.

3. Procédé pour commander la pression de freinage dans une installation de freinage, protégée contre un blocage, d'un véhicule à deux voies, où les vitesses de rotation des roues et/ou leurs accélérations de rotation sont mesurées et sont comparées avec des valeurs de seuils, de façon à sélectionner parmi les roues disposées sur différentes voies de l'essieu arrière du véhicule celle qui présente initialement une instabilité, à produire, sur la base de sa vitesse de rotation ou de son patinage, des signaux de commande pour la diminution et l'augmentation de la pression de freinage dans les freins des roues et à appliquer aux freins, en correspondance aux signaux de commande, des séries d'impulsions d'augmentation de pression dans les roues arrière, caractérisé en ce que le frein d'une des roues initialement instable de l'essieu arrière reçoit, après atteinte d'un état stable, une série d'impulsions d'augmentation de pression, qui a une plus petite fréquence de succession d'impulsions que la série d'impulsions d'augmentation de pression qui est appliquée au frein de l'autre roue stable de l'essieu arrière, la différence entre les fréquences de succession d'impulsions des séries d'impulsions d'augmentation de pression étant fonction du degré d'instabilité d'une des roues.

4. Procédé selon la revendication 3, caractérisé en ce qu'on prédétermine une valeur maximale pour la différence des fréquences de succession d'impulsions.
